(19) Europäisches Patentamt
European Patent Office
Office européen des brevets

(11) Veröffentlichungsnummer: **0 193 748**
**A1**

# (12) EUROPÄISCHE PATENTANMELDUNG

(21) Anmeldenummer: **86101519.6**

(22) Anmeldetag: **06.02.86**

(51) Int. Cl.⁴: **C 08 G 77/08**

(30) Priorität: **07.02.85 DE 3504185**

(43) Veröffentlichungstag der Anmeldung: **10.09.86**
**Patentblatt 86/37**

(84) Benannte Vertragsstaaten: **AT BE CH DE FR GB IT LI NL SE**

(71) Anmelder: **WACKER-CHEMIE GMBH,**
**Prinzregentenstrasse 22, D-8000 München 22 (DE)**

(72) Erfinder: **Riederer, Manfred, Dr. Dipl.-Chem.,**
**Kreislerweg 4, D-8263 Burghausen (DE)**
Erfinder: **Menzel, Hartmut, Dr. Dipl.-Chem.,**
**Mühlenstrasse 8, D-8263 Burghausen (DE)**
Erfinder: **Piehler, Martin, Hintermehring 3,**
**D-8261 Mehring (DE)**

(54) **Verfahren zur Erhöhung des Molekulargewichts von Diorgano(poly)siloxan.**

(57) Bei der Erhöhung des Molekulargewichts von Diorgano(poly)siloxan durch Erwärmen von solchem Siloxan im Gemisch mit quaternärem Phosphoniumhydroxyd wird als quaternäres Phosphoniumhydroxyd solches verwendet, worin im Kation des Phosphoniumhydroxyds einer der Substituenten des Phosphors aus Kohlenstoff-, Wasserstoff- und Siliciumatom(en) sowie gegebenenfalls Siloxansauerstoffatom(en) aufgebaut und einwertig ist, während die drei übrigen Substituenten des Phosphors gleiche oder verschiedene von aliphatischen Kohlenstoff-Kohlenstoff-Mehrfachbindungen freie Kohlenwasserstoffreste sind.

EP 0 193 748 A1

Wacker-Chemie GmbH

München, den 13.11.1984
PAT/Dr.Ru/hu
Wa 8406-S

Verfahren zur Erhöhung des Molekulargewichts von Diorgano(poly)siloxan

Verfahren zur Erhöhung des Molekulargewichts von Diorgano(poly)siloxan durch Erwärmen von solchem Siloxan im Gemisch mit quaternärem Phosphoniumhydroxyd als Katalysator sind bereits bekannt. Hierzu wird z. B. auf US 4 008 261 (ausgegeben 15. Februar 1977, E. D. Brown et al., Dow Corning Corporation) verwiesen. In der in dieser Patentschrift befindlichen Zusammenfassung des Inhalts dieser Druckschrift ist angegeben, daß die dort beschriebenen Katalysatoren gegenüber Feuchtigkeit empfindlich sind.

Es bestand nun die Aufgabe, ein Verfahren zur Erhöhung des Molekulargewichts von Diorgano(poly)siloxan durch Erwärmen von solchem Siloxan im Gemisch mit quaternärem Phosphoniumhydroxyd bereitzustellen, wobei das quaternäre Phosphoniumhydroxyd sich besonders leicht im Diorgano(poly)siloxan, dessen Molekulargewicht erhöht werden soll, verteilen läßt, die Erhöhung des Molekulargewichts innerhalb besonders kurzer Zeit durchgeführt werden kann, Diorganopolysiloxan mit besonders hoher Viskosität hergestellt werden kann, was darauf zurückzuführen ist, daß das erfindungsgemäß verwendete quaternäre Phosphoniumhydroxyd nicht vor Erreichen einer hohen Viskosität des Diorganopolysiloxans durch bei der Kondensation gebildetes Wasser unwirksam gemacht wird, bei

Mitverwendung von die Kettenlänge regelnder Organosiliciumverbindung Diorganopolysiloxan mit weniger als 30 Gewichts-ppm (= Teile je Million Teile) Si-gebundener Hydroxylgruppen erhalten wird und nach Erreichen des gewünschten Molekulargewichts vom Diorganopolysiloxan das quaternäre Phosphoniumhydroxyd durch Erwärmen auf mindestens 135 °C unwirksam gemacht werden kann. Diese Aufgabe wird durch die Erfindung gelöst.

Gegenstand der Erfindung ist ein Verfahren zur Erhöhung des Molekulargewichts von Diorgano(poly)siloxan durch Erwärmen von solchem Siloxan im Gemisch mit quaternärem Phosphoniumhydroxyd, dadurch gekennzeichnet, daß im Kation des Phosphoniumhydroxyds einer der Substituenten des Phosphors aus Kohlenstoff-, Wasserstoff- und Siliciumatom(en) sowie gegebenenfalls Siloxansauerstoffatom(en) aufgebaut und einwertig ist, während die drei übrigen Substituenten des Phosphors gleiche oder verschiedene, von aliphatischen Kohlenstoff-Kohlenstoff-Mehrfachbindungen freie Kohlenwasserstoffreste sind.

Als Diorgano(poly)siloxane können auch bei dem erfindungsgemäßen Verfahren beliebige Diorgano(poly)siloxane eingesetzt werden, die bei den bisher bekannten Verfahren zur Erhöhung des Molekulargewichts von Diorgano(poly)siloxan mittels quaternären Phosphoniumhydroxyds eingesetzt werden konnten.

Beispiele für derartige Organo(poly)siloxane sind insbesondere solche der Formel

$$(R_2SiO)_x \text{ und } HO(SiR_2O)_nH,$$

wobei R jeweils gleiche oder verschiedene, gegebenenfalls halogenierte, einwertige Kohlenwasserstoffreste oder aus Kohlenstoff-, Wasserstoff-, Ethersauerstoff- und Fluoratom(en) aufgebaute, einwertige aliphatische Reste, x ganze Zahlen im Wert von 3 bis 8 und n eine ganze Zahl im Wert von mindestens 1, vorzugsweise mindestens 2, bedeutet.

Vorzugsweise hat n höchstens einen solchen Wert, daß die durchschnittliche Viskosität des Diorganopolysiloxans, dessen Viskosität erhöht werden soll, höchstens 1000 $mm^2.s$ bei 25°C beträgt.

Vorzugsweise enthalten die Reste R in den vorstehend angegebenen Formeln höchstens 1 bis 18 Kohlenstoffatom(e) je Rest Beispiele für Kohlenwasserstoffreste R sind Alkylreste, wie der Methyl-, Ethyl-, Vinyl- und Phenylrest sowie Octadecylreste, Beispiele für halogenierte Kohlenwasserstoffreste R sind der 3,3,3-Trifluorpropylrest und o-, p- und m-Chlorphenylreste. Beispiele für aus Kohlenstoff-, Wasserstoff-, Ethersauerstoff- und Fluoratom(en) aufgebaute, einwertige aliphatische Reste R sind der 1,1,2,2,3,3-Hexafluorpropyloxypropylrest und der 1,1,2,2-Tetrafluorethoxypropylrest. Schon wegen der leichteren Zugänglichkeit sind vorzugsweise mindestens 80 % der Anzahl der organischen Reste in den bei dem erfindungsgemäßen Verfahren eingesetzten Diorgano(poly)siloxanen und damit der Reste R in den oben angegebenen Formeln Methylreste.

Es kann eine Art von Diorgano(poly)siloxan bei dem erfindungsgemäßen Verfahren eingesetzt werden. Es können aber auch Mischungen aus mindestens zwei verschiedenen Arten von

Diorgano(poly)siloxanen bei dem erfindungsgemäßen Verfahren eingesetzt werden.

Vorzugsweise werden bei dem erfindungsgemäßen Verfahren als Diorganopolysiloxane, deren Molekulargewicht erhöht werden soll, in den endständigen Einheiten je eine Si-gebundene Hydroxylgruppe aufweisende Dimethylpolysiloxane mit einer Viskosität von 100 bis 200 $mm^2.s^{-1}$ bei 25°C, insbesondere 140 $mm^2.s^{-1}$ bei 25°C oder etwa 140 $mm^2.s^{-1}$ bei 25°C, eingesetzt.

Als quaternäre Phosphoniumhydroxyde, in deren Kation einer der Substituenten des Phosphors aus Kohlenstoff-, Wasserstoff- und Siliciumatom(en) sowie gegebenenfalls Siloxansauerstoffatom(en) aufgebaut und einwertig ist, während die drei übrigen Substituenten des Phosphors gleiche oder verschiedene von aliphatischen Kohlenstoff-Kohlenstoff-Mehrfachbindungen freie Kohlenwasserstoffreste sind, sind solche der Formel

$$R_3SiR^1R^2_3POH$$

bevorzugt. In dieser Formel hat R die oben dafür angegebene Bedeutung, $R^1$ bedeutet einen zweiwertigen PC-gebundenen, aus Kohlenstoff und Wasserstoffatom(en) sowie gegebenenfalls Silicium- und Sauerstoffatom(en) aufgebauten und von aliphatischen Kohlenstoff-Kohlenstoff-Mehrfachbindungen freien Rest und $R^2$ gleiche oder verschiedene, einwertige, von aliphatischen Kohlenstoff-Kohlenstoff-Mehrfachbindungen freie Kohlenwasserstoffreste.

Alle Ausführungen und Beispiele über bzw. für die Reste R in den oben angegebenen Formeln für Diorgano(poly)siloxane gelten in vollem Umfang auch für die Reste R in der oben angegebenen Formel für die bevorzugten quaternären Phosphoniumhydroxyde. Als weiteres Beispiel für einen Kohlenwasserstoffrest R in der oben angegebenen Formel für die bevorzugten Phosphoniumhydroxyde sei jedoch der tert.-Butylrest genannt.

Vorzugsweise sind die Reste $R^1$ sowohl aus Kohlenstoff- und Wasserstoff- als auch Silicium- und Siloxansauerstoff-atom(en) aufgebaut. Besonders bevorzugt sind als Reste $R^1$ solche der Formel

$$-OSi(OSiR_3)_2(CH_2)_m-,$$

worin R die oben dafür angegebene Bedeutung hat und m eine ganze Zahl im Wert von 1 bis 8, insbesondere 3, ist, wie der Rest der Formel

$$-OSi\left[OSi(CH_3)_3\right]_2(CH_2)_3-.$$

Weitere Beispiele für Reste $R^1$ der bevorzugten Art sind solche der Formel

$$-O(SiR_2O)_y\left[CH_{2-p}(CH_3)_p\right]_m-,$$

worin R und m jeweils die oben dafür angegebene Bedeutung haben, p 0 oder 1 und y eine ganze Zahl im Wert von 1 bis 1000 ist.

Beispiele für die Gruppierung der Formel

$$R_3SiR^1-$$

sind auch solche der Formel

$$R_3Si\left[CH_{2-p}(CH_3)_p\right]_m-,$$

worin R, m und p jeweils die oben dafür angegebene Bedeutung haben, wie Reste der Formel

$$(tert.-C_4H_9)(CH_3)_2Si(CH_2)_3-$$

und

$$(CH_3)_3SiCH_2CHCH_3CH_2-.$$

Die Reste $R^2$ können die gleichen einwertigen, von aliphatischen Kohlenstoff-Kohlenstoff-Mehrfachbindungen freien Kohlenstoffreste sein, die in den quaternären Phosphoniumhydroxyden vorliegen konnten, die auch bei den bisher bekannten Verfahren zur Erhöhung des Molekulargewichts von Diorgano(poly)siloxan mittels quaternären Phosphoniumhydroxyds eingesetzt werden konnten. Vorzugsweise enthalten die Reste $R^2$ höchstens 18 Kohlenstoffatome je Rest. Beispiele für Reste $R^2$ sind somit Alkylreste, wie der Methyl-, Ethyl-, n-Propyl-, Isopropyl-, n-Butyl-, sec.-Butyl-, tert.-Butyl- und 2-Ethylhexylrest sowie Octadecylreste; cycloaliphatische Kohlenwasserstoffreste, wie der Cyclopentyl- und Cyclohexylrest sowie Methylcyclohexylreste; Arylreste, wie der Phenylrest und Naphthylreste; Alkarylreste; wie Tolylreste und Aralkylreste, wie der Benzylrest. Besonders bevorzugt als Rest $R^2$ ist der n-Butylrest wegen seiner verhältnismäßig

leichten Zugänglichkeit.

Die erfindungsgemäß bevorzugt verwendeten Phosphoniumhydroxyde können beispielsweise durch Umsetzung einer Organosiliciumverbindung der Formel

$$R_3SiR^1X,$$

worin R und $R^1$ jeweils die oben dafür angegebene Bedeutung haben und X Chlor, Brom oder Jod ist, wie des Organopolysiloxans der Formal

$$[(CH_3)_3SiO]_3Si(CH_2)_3Cl,$$

mit einem Phosphin der Formel

$$R^2_3P,$$

worin $R^2$ die oben dafür angegebene Bedeutung hat, wie Tri-n-butylphosphin, nach der Gleichung

$$R_3SiR^1X + R^2_3\ P \longrightarrow R_3SiR^1R^2_3PX$$

und Umsetzung des so erhaltenen Phosphoniumhalogenids mit einer basischen Verbindung, wie einem Alkalihydroxyd, z.B. Natriumhydroxyd, oder einem Gemisch aus $Ag_2O$ und Wasser, hergestellt werden. Vorzugsweise wird die Umsetzung mit dem Phosphin in einem gegenüber den Ausgangsprodukten und dem Phosphoniumhalogenid inertem Lösungsmittel, wie Dimethylformamid, und bei 100° bis 120°C durchgeführt.

Es kann eine Art von erfindungsgemäß verwendetem quaternärem

Phosphoniumhydroxyd bei der Durchführung des erfindungsgemäßen Verfahrens eingesetzt werden. Es können aber auch Gemische aus mindestens zwei verschiedenen Arten derartiger Phosphoniumhydroxyde eingesetzt werden.

Weil die erfindungsgemäß verwendeten quaternären Phosphoniumhydroxyde in Diorgano(poly)siloxanen gut löslich sind, lassen sie sich in diesen Siloxanen besonders leicht verteilen und in diese Siloxane besonders leicht eindosieren.

Vorzugsweise werden die erfindungsgemäß verwendeten Phosphoniumhydroxyde in Mengen von 0,005 bis 0,04 Gewichtsprozent oder 50 bis 400 Gewichts-ppm, bezogen auf das Gesamtgewicht der übrigen jeweils verwendeten Organosiliciumverbindungen, eingesetzt. Je größer die Menge an quaternärem Phosphoniumhydroxyd ist, desto höher ist die Geschwindigkeit der Erhöhung des Molekulargewichts und desto höher wird auch das Molekulargewicht des Diorganopolysiloxans.

Bei dem erfindungsgemäßen Verfahren können Organosiliciumverbindungen, welche die Kettenlänge regeln, mitverwendet werden. Dabei können beliebige, die Kettenlänge regelnden Organosiliciumverbindungen eingesetzt werden, die auch bei den bisher bekannten Verfahren zur Erhöhung des Molekulargewichts von Diorgano(poly)siloxan mitverwendet werden konnten. Beispiele für derartige, die Kettenlänge regelnde Organosiliciumverbindungen sind insbesondere solche der Formel

$$R(SiR_2O)_zSiR_3,$$

wobei R die oben dafür angegebene Bedeutung hat und z eine ganze Zahl im Wert von 1 bis 50 ist, sowie der Formel

$$(R_3Si)_2NH,$$

wobei R ebenfalls die oben dafür angegebene Bedeutung hat. Einzelne Beispiele für derartige Verbindungen sind durch Trimethylsiloxygruppen endblockiertes Dimethylpolysiloxan mit einer Viskosität von 20 mPa.s bei25°C, Hexamethyldisiloxan, 1,3-Divinyl-1,1,3,3-tetramethyldisiloxan und Hexymethyldisilazan.

Die Menge von die Kettenlänge regelnder Organosiliciumverbindung hängt, wie dem Fachmann wohlbekannt, von der gewünschten Höhe des Molekulargewichts ab. Je größer die Menge an die Kettenlänge regelnder Organosiliciumverbindung ist, desto niedriger ist die Viskosität der erhaltenen Diorganopolysiloxane.

Vorzugsweise werden bei dem erfindungsgemäßen Verfahren die Kettenlänge regelnde Organosiliciumverbindungen mitverwendet.

Vorzugsweise wird erfindungsgemäß verwendetes quaternäres Phosphoniumhydroxyd dem Diorgano(poly)siloxan, dessen Molekulargewicht erhöht werden soll, und gegebenenfalls mitverwendeter, die Kettenlänge regelnder Organosiliciumverbindung bei Raumtemperatur mindestens eine Stunde vor dem Beginn des Erwärmens zugesetzt, weil sonst beim Erwärmen vom Diorgano(poly)siloxan im Gemisch mit dem quaternärem Phosphoniumhydroxyd innerhalb bis zu 10 Minuten nach Beginn des Erwärmens kein wesentlicher Viskositätsanstieg zu beobachten ist, was die Raum-Zeit-Ausbeute mindern würde. Vor diesem Vermischen mit den übrigen Organosiliciumverbindungen können Lösungen von erfindungsgemäß verwendetem, quaternärem Phosphoniumhydroxyd in z. B. bei Raumtemperatur flüssigen, durch Trimethylsiloxygruppen endblockierten Dimethylpolysiloxanen aufbewahrt werden.

Das erfindungsgemäße Verfahren wird vorzugsweise bei 100°C bis 130°C durchgeführt. Es kann beim Druck der umgebenden Atmosphäre, also 1020 hPa(abs.) oder etwa 1020 hPa (abs.), durchgeführt werden. Es kann aber auch bei höheren Drücken oder niedrigeren Drücken, z. B. bei 0,1 bis 500 hPa (abs.), durchgeführt werden. Das erfindungsgemäße Verfahren kann absatzweise oder kontinuierlich durchgeführt werden.

Die in den folgenden Beispielen verwendete 10 gewichtsprozentige Lösung von quaternärem Phosphoniumhydroxyd wurde nach folgender Vorschrift hergestellt.

In einem 2-l-Dreihalskolben, der mit Thermometer, Rührer und Rückflußkühler ausgestattet ist, werden 129 g (0,346 Mol) 3-Chlorpropyltris-(trimethylsiloxy)-silan und 71 g (0,351 Mol) Tri-n-butylphosphin in 1060 ml Dimethylformamid unter Rühren 24 Stunden auf 110°C erwärmt. Dann wird das Dimethylformamid bei $10^{-3}$ hPa (abs.) abdestilliert. Der Rückstand wird in 700 ml Wasser gelöst und mit 70 g $Ag_2O$ vermischt. Nach 24 Stunden wird die so erhaltene Mischung filtriert, das Filtrat mit 1742 g durch Trimethylsiloxygruppen endblockiertes Dimethylpolysiloxan mit einer Viskosität von 20 mPa.s bei 25°C vermischt und aus der so erhaltenen Mischung das Wasser bei $10^{-3}$ hPa (abs.) abdestilliert.

Beispiel 1

In einem Laborkneter mit einem Fassungsvermögen von 1 l wurden 500 g eines in den endständigen Einheiten je eine Si-gebundene Hydroxylgruppe aufweisenden Dimethylpolysiloxans mit einer Viskosität von 140 $mm^2 .s^{-1}$ bei 25°C mit 55 g durch Trimethylsiloxygruppen endblockiertes Dimethylpolysiloxan mit einer Viskosität von 20 $mm^2 .s^{-1}$ bei 25°C und 0,2 g der 10 gewichtsprozentigen Lösung von quaternärem Phosphoniumhydroxyd, deren Herstellung oben beschrieben wurde, vermischt und dann 60 Minuten bei 1 hPa (abs.) bei 110°C geknetet. Dabei werden in einer Kühlfalle 8 Gewichtsprozent, bezogen auf das Gesamtgewicht der eingesetzten Organopolysiloxane, Anteile, die unterhalb 110°C bei 1 hPa (abs.) sieden, aufgefangen. Dann wird auf 180°C erwärmt und danach sofort gekühlt. Das so erhaltene klare, farblose, durch Trimethylsiloxygruppen endblockierte Dimethylpolysiloxan hat eine Viskosität von 1087 $mm^2 .s^{-1}$ bei 25°C. Es enthält weniger als 30 Gewichts-ppm Si-gebundener Hydroxylgruppen, nach 16 Stunden Erwärmen an der Luft auf 200°C beträgt die Viskositätsänderung nur 1,6 %, gemessen bei 25°C, und nach zweimonatiger Lagerung bei Raumtemperatur ist keine Trübung festzustellen.

Beispiel 2

Die in Beispiel 1 beschriebene Arbeitsweise wird wiederholt mit der Abänderung, daß nur 14,5 g durch Trimethylsiloxygruppen endblockiertes Dimethylpolysiloxan mit einer Viskosität von 20 $mm^2 .s^{-1}$ bei 25°C anstelle der 55 g dieses

Organopolysiloxans eingesetzt werden.

Das so erhaltene klare, farblose, durch Trimethylsiloxygruppen endblockierte Dimethylpolysiloxan hat eine Viskosität von 112 000 $mm^2.s^{-1}$ bei 25°C. Es enthält weniger als 30 Gewichts-ppm Si-gebundener Hydroxylgruppen, nach 16 Stunden Erwärmen an der Luft auf 200°C beträgt die Viskositätsänderung nur 2,6 %, gemessen bei 25°C, und nach zweimonatiger Lagerung bei Raumtemperatur ist keine Trübung festzustellen.

Beispiel 3

Die in Beispiel 1 beschriebene Arbeitsweise wird wiederholt mit der Abänderung, daß nur 10,4 g durch Trimethylsiloxygruppen endblockiertes Dimethylpolysiloxan mit einer Viskosität von 20 mPa.s bei 25°C anstelle der 55 g dieses Organopolysiloxans eingesetzt werden.

Das so erhaltene, klare, farblose, durch Trimethylsiloxygruppen endblockierte Dimethylpolysiloxan hat eine Viskosität von 532 000 $mm^2.s^{-1}$ bei 25°C. Es enthält weniger als 30 Gewichts-ppm Si-gebundene Hydroxylgruppen, nach 16 Stunden Erwärmen an der Luft auf 200°C beträgt die Viskositätsänderung nur 3,2 %,, gemessen bei 25°C, und nach zweimonatiger Lagerung bei Raumtemperatur ist keine Trübung festzustellen.

Beispiel 4

Die in Beispiel 1 beschriebene Arbeitsweise wird wiederholt mit der Abänderung, daß das Gemisch aus den in Beispiel 1 eingangs genannten niedrigmolekularen Produkten bereits

16 Stunden vor dem Einfüllen in den Kneter bereitet wurde. Die Viskosität von etwas über 1000 mPa.s bei 25°C ist bereits nach 10 Minuten erreicht.

Die Eigenschaften des so hergestellten Organopolysiloxans sind die gleichen wie die Eigenschaften des gemäß Beispiel 1 hergestellten Organopolysiloxans.

Beispiel 5

In einem Doppelschneckenkneter mit einer bei 130°C und 8 hPa (abs.) gehaltenen 140 cm langen Reaktionszone werden kontinuierlich 100 l je Stunde des in den endständigen Einheiten je eine Si-gebundene Hydroxylgruppe aufweisenden Dimethylpolysiloxans mit einer Viskosität von 140 $mm^2 . s^{-1}$ bei 25°C und 40 g je Stunde der 10 gewichtsprozentigen Lösung von quaternärem Phosphoniumhydroxyd, deren Herstellung oben beschrieben wurde, eingespeist. Über eine Austragsschnecke gelangt durch einen Wärmeaustauscher, in dem das Organopolysiloxan auf 160°C gebracht wird, in das Austragsrohr in den endständigen Einheiten je eine Si-gebundene Hydroxylgruppe aufweisendes Dimethylpolysiloxan mit einer Viskosität von 80 000 mPa.s bei 25°C.

Es ist klar und farblos. Auch nach 12 Monaten Lagerung dieses Organopolysiloxans bei Raumtemperatur ist keine Änderung der Viskosität und des Aussehens dieses Organopolysiloxans festzustellen.

Es eignet sich ausgezeichnet zur Herstellung von Organopolysiloxanelastomeren.

Patentansprüche

1. Verfahren zur Erhöhung des Molekulargewichts von Diorgano(poly)siloxan durch Erwärmen von solchem Siloxan im Gemisch mit quaternärem Phosphoniumhydroxyd, dadurch gekennzeichnet, daß im Kation des Phosphoniumhydroxyds einer der Substituenten des Phosphors aus Kohlen-, Wasserstoff- und Siliciumatom(en) sowie gegebenenfalls Siloxansauerstoffatome(n) aufgebaut und einwertig ist, während die drei übrigen Substituenten des Phosphors gleiche oder verschiedene, von aliphatischen Kohlenstoff-Kohlenstoff-Mehrfachbindungen freie Kohlenwasserstoffreste sind.

2. Verfahren nach Anspruch 1, dadurch gekennzeichnet, daß die drei von Silicium freien Substituenten des Phosphors im Kation des Phosphoniumhydroxyds n-Butylreste sind.

3. Verfahren nach Anspruch 1 und 2, dadurch gekennzeichnet, daß als quaternäres Phosphoniumhydroxyd solches der Formel

$$\left[(CH_3)_3SiO\right]_3Si(CH_2)_3(n\text{-}C_4H_9)_3POH$$

verwendet wird.

4. Verfahren nach mindestens einem der Ansprüche 1 bis 3, dadurch gekennzeichnet, daß quaternäres Phosphoniumhydroxyd in Mengen von 0,005 bis 0,04

Gewichtsprozent, bezogen auf das Gesamtgewicht der übrigen jeweils verwendeten Organopolysiliciumverbindungen, eingesetzt wird.

5. Verfahren nach mindestens einem der Ansprüche 1 bis 4, dadurch gekennzeichnet, daß das quaternäre Phosphoniumhydroxyd dem Organo(poly)siloxan, dessen Molekulargewicht erhöht werden soll, und gegebenenfalls mitverwendeter, die Kettenlänge regelnder Organosiliciumverbindung bei Raumtemperatur mindestens eine Stunde vor Beginn des Erwärmens zugesetzt wird.

0193748

Europäisches Patentamt

**EUROPÄISCHER RECHERCHENBERICHT**

Nummer der Anmeldung

EP 86 10 1519

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 433 096 (G.N. BOKERMAN) * Ansprüche 1,5; Spalte 5, Zeilen 41-53 * --- | 1 | C 08 G 77/08 |
| A | FR-A-1 566 625 (DOW CORNING) * Abstract * ----- | 1 | |
| | | | RECHERCHIERTE SACHGEBIETE (Int. Cl.4) |
| | | | C 08 G<br>C 08 L |

Der vorliegende Recherchenbericht wurde für alle Patentansprüche erstellt.

| Recherchenort | Abschlußdatum der Recherche | Prüfer |
|---|---|---|
| DEN HAAG | 20-06-1986 | DEPIJPER R.D.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82